# EUROPEAN PATENT APPLICATION

(11) **EP 2 871 867 A1**
(43) Date of publication of application: **13.05.2015**
(21) Application number: 13191826.0
(22) Date of filing: 06.11.2013
(51) Int. Cl.: H04W 4/02, H04W 36/24, H04W 36/32

(54) **Optimized operation of a mobile device**

(71) Applicant: MyOmega System Technologies GmbH, 90411 Nürnberg (DE)
(72) Inventor: Möller, Bernd, 91239 Henfenfeld (DE); Gasiba, Tiago, 90482 Nürnberg (DE)
(74) Representative: Westphal, Mussgnug & Partner Patentanwälte mbB

(57) **Abstract**

Disclosed is a method, comprising:
recording a sequence of data sets by a mobile computing device to obtain a recorded sequence of data sets;
comparing by the mobile computing device the recorded sequence of data sets with a stored sequence of data sets;
performing at least one activity associated with the stored sequence of data sets when the recorded sequence of data sets matches the stored sequence of data sets.

## Description

Embodiments of the present invention relate to an optimized operation of a mobile device, such as optimized user behavior in heterogeneous networks such as handovers and optimized transitions to non-cellular wireless systems.

A mobile communication system (that can also be referred to as wireless communication system) includes a plurality of base stations. Also multiple mobile technologies, such as LTE, 3G and 2G, and non-cellular technologies, such as WIFI, can be combined into a heterogeneous network where a plurality of base stations provides service to mobile devices, such as mobile phones, mobile computers, or the like, that are currently located in a geographical area covered by at least one base station. The geographical area covered by one base station is often referred to as radio cell. A mobile device can be connected to a mobile or non-cellular communication system through one or more base stations through at least one wireless communication channel in order to uses services of the mobile communication system. Examples of those services include setting up telephone calls to other users coupled to the mobile communication system, downloading /uploading data from/to a data server coupled to the mobile communication systems, establishing and maintaining the status related to the mobile systems..

When the mobile device is connected to one base station and moves from the radio cell associated with this base station to a radio cell associated with another base station, a network controller will decide on a handover. That is, the network controller will initiate handover procedures such that the mobile device can be connected to the other base station, and therefore the mobile device can continue to use services from the mobile communication system.

The handover decision taken by the network controller can be based on criteria reported by the mobile device through the base station. These criteria include, for example, the RF levels and the quality (signal to noise and interference ratio) of radio signals received by the mobile device from the base station to which the mobile device is connected to, and from other base stations.

The reports provided by the mobile device, and the communication between the network controller and the base stations involved in a handover may provide a significant load to the communication system.

The problem underlying the present invention is to improve the services for the user within a communication system by utilizing the capabilities of mobile computing devices and to offload the system with unnecessary network management decisions.

This problem is solved by a method in accordance with claim 1. Embodiments are disclosed in the dependent claims.

A method in accordance with one embodiment of the invention includes recording a sequence of data sets by a mobile device to obtain a recorded sequence of data sets; comparing by the mobile device the recorded sequence of data sets with a stored sequence of data sets stored in the mobile device; and performing at least one activity associated with the stored sequence of data sets when the recorded sequence of data sets matches the stored sequence of data sets.

Examples are explained below with reference to the drawings. These drawings serve to illustrate certain principles, so that only aspects necessary for understanding these principles are illustrated. The drawings are not to scale. In the drawings the same reference characters denote like features.
- Figure 1: schematically illustrates one embodiment of a mobile communication system,
- Figure 2: schematically illustrates several radio cell scenario and a path of a mobile device through some of these radio cells,
- Figure 3: illustrates one embodiment of a method performed by a mobile device,

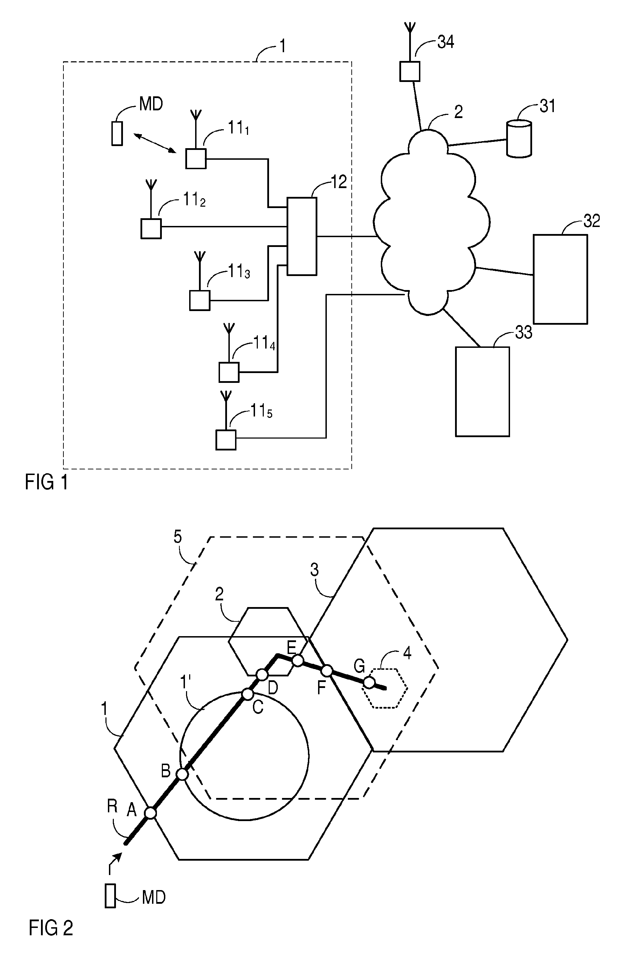

In order to ease understanding of embodiments of the invention, Figure 1 schematically illustrates one embodiment of a conventional mobile communication system. The mobile communication system includes a radio access network (RAN) 1 which provides mobile computing devices radio access to the system, and a core network (CN) 2 to which the radio access network 1 is connected. The radio access network includes a plurality of base stations 11₁-11₄, and may include at least one base station controller 12 that controls at least some of the base stations 11₁-11₄, and couples the base stations 11₁-11₄ to the core network 2. Just for the purpose of explanation, in Figure 1 only five base stations 11₁-11₄, and one base station controller 12 are shown. However, the radio access network 1 may include more than five base stations, and more than one base station controller.

Each of the base stations 11₁-11₄ of the radio access network is configured to set up a wireless communication path to at least one mobile computing device MD. The mobile computing device MD, that can also be referred to as user equipment (UE), includes a radio interface that enables the mobile device MD to set up the communication with the base station. In the following, a mobile computing device MD that has set up a wireless connection to one base station will be referred to as connected to that base station. The mobile computing device may include two or more SIM (Subscriber Identity Module) cards that each represent one identity. In this case, the mobile computing device will be referred to as connected to one base station when it has set up a communication using one of these identities. The mobile computing device MD is, for example, a mobile phone (smartphone), a portable computer, a tablet computer, or the like.

Referring to Figure 1, the core network can be connected to one or more of a data server 31, another radio access network 32, a public switched telephony network (PSTN) 33, a wireless local area network (WLAN) 34, or the like. When the mobile computing device MD is connected to one of the base stations 11₁-11₄, it may use the mobile communication system to transfer data from/to another mobile device in the same radio access network, or to transfer data from/to another device coupled to the core network 2, such as the data server 31, a device coupled to the core network 2 through the other radio access network 32, a device coupled to the core network 2 through the PSTN 33, or a device coupled to the core network through the WLAN 34. Although not illustrated, a plurality of data servers, radio access networks, WLANs, and PSTNS can be connected to the core network 2. The data transferred from/to the mobile device MD when connected to one base station can be speech data when a telephone communication has been set up between the mobile device and the other device, or other data than speech data.

The radio access network can be a conventional 3GPP (3rd Generation Partnership Project) radio access network, such as GSM (Global System for Mobile Communication) BSS (base station subsystem), GERAN (GSM EDGE Radio Access Network), UTRAN (UMTS Terrestrial Radio Access Network), or EUTRAN (Evolved UMTS Terrestrial Radio Access Network). EUTRAN is radio access network of an LTE (Long Term Evolution) or LTE-A (LTE Advanced) system.

In a GSM radio access network the base stations 11₁-11₄ are also referred to as base transceiver stations (BTS). In this type of system, the radio access system with the base stations 11₁-11₄ is often referred to as base station subsystem (BSS). This GSM radio access network provides access to both Circuit Switched (CS) and Packet Switched (PS) core networks.

A GERAN includes, in addition to the basic GSM technology, GPRS (General Packet Radio Service) and EDGE (Enhanced Data Rates for GSM Evolution) technologies and can be connected to a core network implemented as a UMTS (Universal Mobile Telephone Standard) core network, thus enabling real-time IP-based services.

A UTRAN (UMTS Terrestrial Radio Access Network), which is one of the 3rd Generation (3G) Wireless Mobile Communication Technologies, can carry many traffic types from real-time Circuit Switched to IP based Packet Switched. In a UTRAN, the base stations BS are referred to as Nodes (Node Bs), and the base station controller is referred to as Radio Network Controller (RNC).

A EUTRAN does not include a base station controller. The base stations in a EUTRAN are referred to as eNodeBs (evolved Node Bs), and are directly connected to the core network. For example, the base station 11₅ shown in Figure 1 may represent an eNodeB of a EUTRAN. The functionality of the base station controller in the radio access systems explained before is performed by the eNodeB and the core network in the EUTRAN. EUTRAN is one of the 4th Generation (4G) Wireless Mobile Communication Technologies that also offers device to device communication, and extended radio offloading technologies including WIFI (WLAN) offloading mechanisms.

The mobile communication network includes a network controller that is configured to take network decisions, such as handover decisions, based on measurement data received from the mobile device. In a radio access network that includes a base station controller (BSC in a GSM BSS, RNC in a UTRAN) the base station controller may be part of the network controller. In a radio access network without base station controller, such as an EUTRAN, the network controller may be realized by the eNodeB and the core network (evolved packet core).

Each base station in a radio access network, such as the base stations 11₁-11₄ in the radio access network 1 illustrated in Figure 1, cover a certain geographical area referred to as cell (radio cell). In each cell, radio signals from the associated base station are available with a quality (signal strength, signal-to-noise radio) that allows a mobile device to connect to the base station (to set up a wireless communication channel between the mobile device and the base station). When, however, the mobile device moves from a cell associated with a first base station to a cell associated with a second base station, the signal quality of radio signals received by the mobile device from the first base station may become so low that the communication channel cannot be maintained, while the signal quality of radio signals received by the mobile device from the second base station may be good enough for the mobile device to connect to the second base station. In this case the mobile device connects to the second base station before the connection between the mobile device and the first base station is interrupted. This is referred to as handover. The handover is initiated by the network controller.

An handover may take place between base stations of the same radio access network, or between base stations of different radio access network. In the first case, only the network controller of one radio access network is involved in the handover. In the second case, two network controllers are involved, namely the network controller of the radio access network the mobile devices leaves, and the network controller of the radio access network the mobile device enters. The different radio access networks can be radio access networks of the same type (such as GERAN, UTRAN, EUTRAN, WIFI), or of different types. A handover may also take place between one of the cellular networks explained before and a non-cellular network, such as a WIFI (WLAN). As used herein, the term handover refers to any kind of handover, that is a handover in the same radio access network, between different radio access networks, or between a cellular network and a non-cellular network. In the first case, the handover may include an intra frequency handover, or an inter frequency handover. In an LTE system, a mobile device may use multiple carriers in one communication session. In this case, the carriers can be handed over (redirected) independently from one base station to another base station. In this case, a handover involves the redirecting of at least one of the multiple carriers.

Figure 2 schematically shows a geographic area that is covered by a plurality of radio cells 1-5. Each of these cells 1-5 is associated with a base station (not shown), so that a mobile device that is located in the geographic area covered by one cell can connect to the respective base station. The individual cells shown in Figure 2 can be cells associated with base stations of only one radio access network, or can be radio cells of different radio access networks. The individual radio cells 1-5 can be radio cells of different types of radio access networks. For example, radio cells 1, 2 and 3 shown in Figure 1 may be radio cells of a EUTRAN (LTE), radio cell 4 may be radio cell of a WLAN, and radio cell 5 may be a radio cell of a GSM radio access network.

Some of these cells 1-5 may overlap. That is, there are geographical positions where radio signals from several base stations are available, so that the mobile device may connect to several base stations. The area labeled with reference character 1' inside the radio cell 1 is a cell with elCIC (enhanced Inter-Cell Interference Coordination) where interference is reduced and/or actively managed.

The bold line in Figure 2 represents a route R that a mobile device MD may take in the geographical area covered by the radio cells. On this way, the mobile device crosses several radio cell borders. The geographical positions where the mobile device MD crosses these borders are labeled with A-G in Figure 2. In a conventional mobile communication system, the following network activities at the positions A-G may occur when the mobile device MD travels along route R:
A: handover to radio cell 1,
B: reducing the transmission power of the mobile device MD,
C: increasing the transmission power of the mobile device MD,
D: handover to radio cell 2,
E: handover to radio cell 1,
F: handover to radio cell 3,
G: handover to radio cell 4.

In a conventional mobile communication system, the handovers and the variation of the power level of the mobile device is triggered by a network controller. The network controller forces the mobile device MD to report the signal quality of radio signals the mobile device MD receives from base stations. Each base station has a unique base station identifier (ID) that is regularly transmitted, so that the individual radio signals received by the mobile device MD can be assigned to the individual base stations. The standard reporting of the mobile computing device MD may contain the signal quality (in particular the received signal strength (RSS)), and the IDs (Identifiers) of the surrounding cells. Within the mobile computing device MD further information can be available such as bit error rates, transmit power, received signal strengths of signals received from several base stations, or the like. Based on these reports, the network controller takes the handover decisions. This decision may be based on a algorithm that intends to connect the mobile device MD to that base stations that provides the highest signal quality at the current position of the mobile device MD.

However, this conventional approach may result in handover decisions that are not absolutely necessary. For example, in embodiment shown in Figure 2, the route R of the mobile device MD between the handover to the radio cell 2 (at position D), and the handover to the radio cell 1 (at position E) is completely inside radio cell 1, so that (although the mobile device MD may receive the radio signal from the base station associated with the radio cell 2 with a higher signal quality than the radio signal from the base station associated with the radio cell 1) the handovers at D and E are not necessary. There is even the risk that one of these handovers fails, so that the connection of the mobile device to the communication system is interrupted. Thus, preventing unnecessary handovers may reduce the traffic in the communication system, and may even increase the service quality.

One approach to prevent those unnecessary handovers is explained below. This approach is based on the assumption that most users of mobile devices regularly take identical routes, such as from home to work, and back. For example, the route R illustrated in Figure 2 is a route leading to the home of the user of the mobile device MD. Radio cell 4 is, for example, a WLAN cell in the user's home.

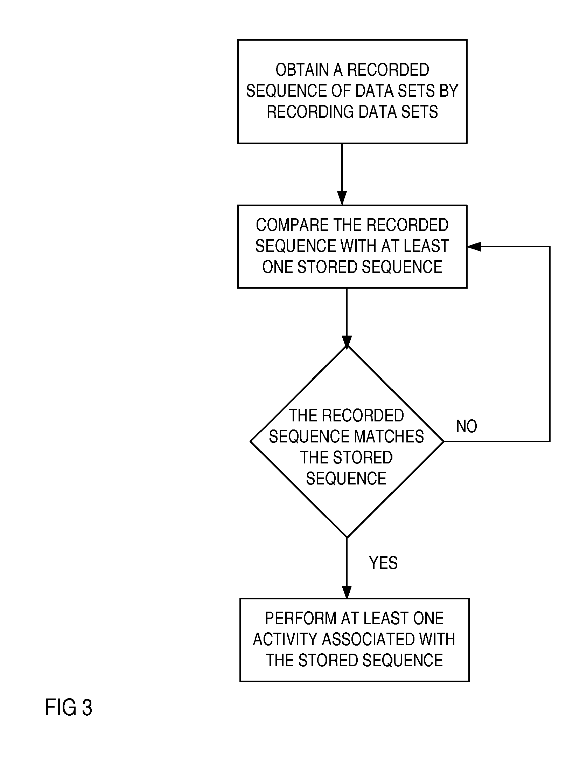

According to one embodiment of the invention, the mobile device MD, referring to Figure 3, records a sequence of data sets. Each of these data sets is recorded at a certain position, where an activity in the network is performed, such as the activities A-F on the route R shown in Figure 2. The mobile device further compares the recorded sequence of data sets with stored sequences of data sets. Each of these stored sequences of data sets represents an event (a network activity) similar to the activities A-F explained with reference to Figure 2. When the recorded sequence of data sets (briefly referenced to as "recorded sequence" in the following) matches one or more sequences of data sets (briefly referred to as "stored sequence" in the following) the mobile computing device performs at least one activity associated with the matching stored sequence.

For example, referring to Figure 2, a stored sequence may represent the route R from position A, or before, to position C. At least one activity associated with this stored sequence may include activities of the mobile device MD that prevent the network controller from forcing the mobile device MD to do handovers at positions D and E. This is based on the assumption that the mobile device MD having already taken the route R to position C will proceed on the route R to radio cell 4. Thus, the at least one activity associated with the stored sequence is, in particular, an activity the mobile device MD performs after it has taken a route corresponding to the stored sequence. The at least one activity associated with the stored sequence may be time-triggered, position-triggered, or event-triggered. That is, the mobile device MD may perform the at least one activity after a certain time period after it has been detected that the recorded sequence matches the detected sequence, when the mobile device MD reaches a pre-defined position, or when a pre-defined event is detected.

In the embodiment shown in Figure 2 performing the activities that prevents the network controller from forcing the mobile device MD to perform the handovers at position D and position E may be position-triggered, or event-triggered. For example, the mobile device MD may start the activities when it first receives the radio signal from the base station associated with radio cell 2. Activities, that may prevent the network controller from forcing the mobile device MD to perform the handovers may include, for example, modifying the quality reports forwarded to the network controller. For example, the mobile device MD may not report the radio signal associated with cell 2, or may report a lower signal quality than detected. Further, the mobile device MD may report a higher signal quality of the radio signal associated with radio cell 1 than detected. A report modified in this way will cause the network controller to control the mobile device MD such that it stays connected to the radio cell 1. It should be noted that this is only an example of activities associated with a stored sequence of data sets. Those activities may be defined by the network operator to optimize the behavior of the mobile computing device in his network, in particular in specific areas (for dedicated cell IDs) in the network.

The data sets recorded by the mobile device MD and the data sets stored by the mobile device may include any type of data sets that are suitable to identify a geographical position. According to one embodiment, these data sets include information on network activities.

These information may include, but are not restricted to, signal levels of radio signals received by the mobile computing device MD, handovers, a variation of the signal power level of the mobile device MD. Usually, at each geographical position the mobile computing device MD receives radio signals from several base stations where the individual radio signals can be distinguished based on the base station IDs. The power level of a radio signal transmitted by one base station decreases as the distance to the base station increases. Thus, based on the power levels of radio signals received from two or more base station a geographical position can be identified. The radio signals used to identify the position may include base station signals from the communication system to which the mobile device has access, but may also include base station signals from a communication system that cannot be accessed by the mobile device (for example, because the user does not have a contract with the provider of this system).

A handover from one radio cell to another radio cell takes place when the mobile device MD is at the border of one radio cell to another radio cell. This border may cover an elongated geographical area. In connection with other parameters, such as signal levels of radio signals, a handover may used to identify a geographical position. Thus, a data set representing a handover and the other parameters may used to identify a geographical position. Equivalently, a data set representing a reduction of the mobile device's power level (used to prevent interferences) and other parameters may be used to identify a geographical position.

Additionally, or alternatively to using network activities for identifying a geographical position, conventional positioning data, such as positioning data received from a satellite based positioning system (such as the Global Positioning System (GPS)) can be used to identify individual positions. Thus, a data set may include those positioning data..

Recording the data sets by the mobile device in order to generate the recorded sequence may be time-triggered, or event-triggered. In the first case the mobile computing device MD stores data representing the current position of the mobile computing device MD based on the time. For example, the mobile computing device MD stores data sets in pre-defined time intervals. According to one embodiment, these time intervals are between 1 s and 100s.. In the second case, the mobile computing device MD may record a new data set each time a set of parameters (data set) that is recorded to represent one position significantly changes. If, for example, the signal levels of several radio signals are included in a data set to represent one position, and the signal level of one of these signals significantly changes, or a new radio signal is detected, it can be assumed that the position of the mobile device MD has changed. In this case a new parameter set (data set) will be recorded as a representation of the new position. For example, a significant change of a signal level of a radio signal has occurred when the signal level crosses (falls below or rises above) a predefined threshold.

The stored sequence of data sets is basically generated in the same way as the recorded sequence of data sets. That is, the data sets may be recorded time-triggered or event-triggered, and the positions may be represented by at least one of network activities and conventional positioning data.

Recording the sequence of data sets that is then stored as the stored sequence can be user triggered, or event triggered. For example, a user may trigger recordation of data sets when he starts to take a route that he expects to take repeatedly in the future. This is referred to as recording a route in the following. An event that may trigger recordation of data sets is, for example, when the mobile device MD leaves a radio cell in which it remained for several hours. Leaving one specific radio cell after several hours may indicate that the user leaves his home to go to work, or leaves his work to return home.

Due to the limited memory inside mobile computing devices criteria for the storage of sequences may be defined. One of the ideas of the invention to improve the user data behavior for those areas that are most relevant for the user. That is, routes in those areas that are most relevant for the user may be recorded. Several different criteria may be used to trigger the mobile computing device to store (record) a route.
a. Time triggers and or user interaction may define such an area. Example the user is asked, after staying for some time in a certain area if this is an area where he wishes his mobile computing device MD to optimize his network performance and behavior.
b. Another trigger point could be that a defined list of cell IDs and the surrounding areas are to be optimized and hence recording will be triggered when the mobile device, based on cell IDs, detects that it is in the corresponding area.
c. Further, a geographic position may be defined as a trigger point and the mobile computing device will start recording the data sequences at that geographic position.
d. Recording could also be triggered through, e.g. NFC tags. For example, an operator may provide tags to allow the user to mark his office, home and one or more other places to set points where the device records the surrounding cells and defines trigger points.
e. Recording may also be triggered in case of fatal events. In case of such an event a sequence of data sets is stored. Should a similar event occur multiple times recording is triggered. An example could be a repeated handover failure. After n times (with n>1) failures with the same cell ID an automatic improvement would be initiated.

According to one embodiment, a recorded route is analyzed by the mobile computing device MD before the data sets associated with this route, or parts of the data sets associated with this route are stored in the mobile computing device. For example, on a long route which a user repeatedly takes there may only be a few positions where activities of the mobile computing device MD are required. For example, in the embodiment shown in Figure 2, activities of the mobile computing device MD may only be required when the mobile computing device MD is between positions D and E. In order to detect that the mobile computing device MD is approaching position D a sequence of only several data sets, required. Thus, from a long sequence that represents the recorded route, the mobile device MD may store only a shorter sequence. This shorter sequence is the stored sequence the mobile device MD will use in operation in order to detect whether the mobile computing device MD approaches a certain position, such as position D shown in Figure 2.

Different algorithms may be employed to detect those positions on a recorded route where activities of the mobile computing device MD are required. For example, where handovers failed multiple times, where the handover sequences are extremely dense and repeating in short time, where handovers to previous service cells take place within short period of times, those events might be indicators for non-efficient handover behaviors and trigger activities to optimize the network behavior. A network behavior optimization could be to trigger the storage of the data sets in case the route is repeated and to store the signal strength and the available IDs of the surrounding base stations, an altering of the network reports could be executed according to additional algorithms and hence result into a self-healing network behavior. Conventional matching (correlation) algorithms, such as algorithm using a maximum likelihood estimation, can be used to compare a recorded sequence with the stored sequence in order to detect whether the recorded sequence matches the stored sequence. Those algorithms are robust enough to correctly detect that the mobile computing device is taking a route that matches with a recorded route even when one (or more data sets) of currently recorded data sets is different from the data sets of the stored route.

The method explained before is not restricted to have only one stored sequence stored in the mobile computing device. Instead, several stored sequences can be stored, wherein each of these sequences may represent a route or a part of a route a user of the mobile computing device repeatedly takes. According to one embodiment, the mobile computing device is configured to store between 5 and 10 radio cells where activities are required when the mobile computing device approaches the corresponding cell, and may store between 5 and 10 routes leading to each of these cells. A "store route" may include between 20 and 50 data sets.

Further, the at least one activity associated with one stored sequence is not restricted to activities in connection with preventing unnecessary handovers. Instead, any kind of useful activity may be taken by the mobile computing device upon detecting that a user has taken a route associated with the stored sequence. Only some of these possible activities are briefly disclosed below.

According to one embodiment, the at least one activity associated with a stored sequence includes searching for a predefined radio cell. For example, referring to Figure 2, the mobile computing device MD using a stored sequence may detect that it approaches radio cell 4 (e.g., the home WLAN cell). In this case, the activity associated with the stored sequence 4 may include searching for this radio cell 4 in order to connect to this radio cell 4 as soon as possible. According to one another embodiment, the mobile device MD remotely controls electronic devices through the mobile communication system at the place it approaches. When, for example, the mobile computing device MD detects that it approaches a certain place, which may be the home of the user, it may cause a home control unit to switch on lights, turn up the heating system, or open the garage door. Those activities may even be triggered when the user is relatively far away from his home.

In an ever growing number of companies employees may bring their own mobile device and use the mobile device on the job. In this case, different environments may be installed on the device, one for private use, and one for professional use. According to one embodiment, the at least one activity associated with a stored sequence is to switch between these environments. For example, when the mobile computing device MD detects that the user approaches work, it may switch to the work environment, and when the mobile device detects that the user approaches home, it may switch to the private environment The method could be used to allow for advanced cell configurations. A chain of small cells along a route may require a plurality (such as between 10 an 20) of handovers along a short distance (such as between 1 km and 2km). These handovers are predictable when it is detected that the user takes this route. Thus, the handovers can be prepared the next frequency to be used could increase the handover speeds and make such a configuration highly reliable.

Further, through the recording of data sets the entrance to the home area can be triggered automatically and proactive. The leaving of the area could take place when a distance to the area is done and hence the radius around the home is providing thresholds for triggering.

The at least one activity associated with a stored sequence can be defined by the mobile computing device, or can be defined by a user. For example, activities associated with the operation of the mobile computing device in the communication system will be defined by the mobile computing device MD itself. These activities may include activities in connection with preventing handovers (as discussed above) or other network related actions, such as actions in connection with improving the service quality.

According to one embodiment, e.g. if the mobile computing device MD approaches its storage limit, user interaction will allow the user to decide which routes he would like to optimize. For example, this user interaction allows a user to select the most relevant areas by offering e.g. selection lists where he can select: home, work, sports, or the like

According to one another embodiment, the user may define activities associated with the stored sequence. In this case, after recording a route, the user may identify certain positions on the route and may associate certain activities with these positions. The mobile computing device MD then stores those sequences of the route that are required to detect that the mobile computing device MD approaches a specific position, and associates the activity defined by the user with this stored sequence.

The method explained herein before can be implemented using a software (mobile application) running on the mobile computing device.

## Claims

1. A method, comprising:
recording a sequence of data sets by a mobile computing device to obtain a recorded sequence of data sets;
comparing by the mobile computing device the recorded sequence of data sets with a stored sequence of data sets;
performing at least one activity associated with the stored sequence of data sets when the recorded sequence of data sets matches the stored sequence of data sets.

2. The method of claim 1,
wherein comparing comprises comparing the recorded sequence with a plurality of stored sequence, and
wherein the mobile computing device performs at least one activity associated with one of the plurality of stored sequences when the one of the plurality of stored sequences matches the recorded sequence.

3. The method of claim 1 or 2,
wherein recording the data sets includes at least one of
recording handovers of the mobile computing device between base stations,
recording base station radio profiles,
recording changes in a power level of the mobile computing device.

4. The method of one of the preceding claims,
wherein recording the data sets includes
recording base station identifiers (IDs).

5. The method of one of the preceding claims, wherein recording the data sets comprises at least one of recording position data received from a satellite based positioning system, recording a time when the data set was acquired, recording a date when the data set was acquired.

6. The method of one of the preceding claims, wherein activities associated with the stored sequence of data sets comprise:
filtering signal quality reports transmitted to a network controller.

7. The method of claim 6, wherein filtering the signal quality reports comprises:
suppressing the signal quality reports.

8. The method of one of the preceding claims, wherein activities associated with the stored sequence of data sets comprise:
searching for a predefined base station.

9. The method of claim 8, wherein the predefined base station is a WLAN base station.

10. The method of one of the preceding claims, wherein activities associated with the stored sequence of data sets comprise:
remotely controlling at least one electronic device by the mobile computing device through a communication network.

11. The method of claim 10, wherein the at least one electronic device includes a home control unit that is configured to control at least one of an electric light, an automatic door opener, and a heating system.

12. The method of one of the preceding claims, wherein activities associated with the stored sequence of data sets comprise:
activating or deactivating applications running on the mobile computing device.

13. The method of one of the preceding claims, wherein activities associated with the stored sequence of data sets comprise:
preparing for a handover.

14. A computer program comprising software code adapted to perform method steps in accordance with one of the preceding claims.
